# EUROPÄISCHE PATENTSCHRIFT

(11) **EP 3 790 133 B1**
(45) Veröffentlichungstag und Bekanntmachung des Hinweises auf die Patenterteilung: **23.11.2022**
(21) Anmeldenummer: 20194279.4
(22) Anmeldetag: 03.09.2020
(51) Int. Cl.: H02G 3/06, H01R 13/24, H01R 13/648

(54) **BEFESTIGUNGSELEMENT FÜR KONTAKTIERUNG VON ABGESCHIRMTEN KABELN FÜR KABELVERSCHRAUBUNGEN**
FASTENING ELEMENT FOR CONTACTING SHIELDED CABLES FOR CABLE FITTINGS
ÉLÉMENT DE FIXATION PERMETTANT DE METTRE EN CONTACT LES CÂBLES BLINDÉS POUR PRESSE-ÉTOUPES

(30) Priorität: 05.09.2019 DE 202019104919 U
(43) Veröffentlichungstag der Anmeldung: 10.03.2021
(73) Patentinhaber: WISKA Hoppmann GmbH, 24568 Kaltenkirchen (DE)
(72) Erfinder: Leinemann, Stefan, 24568 Kaltenkirchen (DE)
(74) Vertreter: Eisenführ Speiser

(56) Entgegenhaltungen:
- EP-A1- 1 710 880
- EP-A2- 0 780 924
- EP-A2- 2 479 857
- DE-A1- 19 615 602
- DE-U1-202004 005 457
- DE-U1-202012 005 796
- DE-U1-202012 101 656
- DE-U1-202013 006 413

## Beschreibung

Die Erfindung betrifft ein Befestigungselement für Kontaktierung von abgeschirmten Kabeln für Kabelverschraubungen mit einer Montagehülse und einer Befestigungshülse.

Kabelverschraubungen, insbesondere Befestigungselemente, werden insbesondere dazu eingesetzt, um Kabel durch eine Wand, vorzugsweise durch eine Gehäusewand, hindurchzuführen. Derartige Kabelverschraubungen dienen insbesondere dazu, die Kabel vor einer Beschädigung durch Relativbewegungen im Betrieb an Kanten von Öffnungen der Wand zu bewahren. Kabelverschraubungen können auch eine Abdichtung der Kabeldurchführung bewirken.

Darüber hinaus können Kabelverschraubungen eingesetzt werden, um abgeschirmte Leitungen durch eine Öffnung in eine Gehäusewand zu führen. Hierbei haben Kabelverschraubungen oftmals die Funktion, abgeschirmte Leitungen zu erden, indem ein elektrischer Kontakt von einem abgeschirmten Geflecht einer Leitung zu der Wand, in der die Öffnung ausgebildet ist, durch die Kabelverschraubung hergestellt wird.

Unter einer abgeschirmten Leitung kann hierbei eine Leitung verstanden werden, die eine oder mehrere Leiter umfasst, die von einem elektrisch leitfähigen Mantel umgeben sind. Der Mantel kann in der Regel durch ein Geflecht aus elektrisch leitenden Drähten gebildet werden und kann dazu dienen, um die im Inneren verlaufenden Leitungen gegen äußere Einflüsse, insbesondere elektromagnetische Felder, abzuschirmen. Dadurch kann eine störungsfreie Datenübertragung ermöglicht werden.

Zum vorstehend genannten Zweck ist es bekannt, Kabeldurchführungen aus elektrisch leitfähigem Material herzustellen und die abgeschirmte Leitung im Bereich der Kabeldurchführung soweit abzuisolieren, dass die Abschirmung offenliegt und unmittelbar oder in einer umgestülpten Form in elektrischen Kontakt mit der Kabeldurchführung gelangt und auf diese Weise ein elektrischer Kontakt zum Gehäuse hergestellt wird. Derartige Kabeldurchführungen sind oftmals aus Metall gebildet.

Aus DE 20 2011 002 287 U1 ist beispielsweise eine Kabelverschraubung für abgeschirmte Leitungen bekannt, die eine Einsteckhülse und eine Befestigungshülse, die lösbar formschlüssig oder kraftschlüssig auf einem Innenabschnitt der Einsteckhülse befestigt ist, umfasst. Hierbei ist die Einsteckhülse aus einem elektrisch nichtleitenden Kunststoffmaterial und die Befestigungshülse aus einem elektrisch leitenden Material ausgebildet und weist Mittel zur elektrischen Kontaktierung mit der Abschirmung der abgeschirmten Leitung auf.

Es ist auch bekannt, Befestigungshülsen aus einem elektrisch leitfähigem Material bereitzustellen, die ausgebildet sind, um den Kabelschirm elektrisch zu kontaktieren. So offenbart beispielsweise DE 10 2011 003 071 A1 eine Kabeldurchführung, umfassend Gehäusestutzen, eine an den Gehäusestutzen vorgesehene Kabelfixierung, einen in dem Gehäusestutzen vorgesehenen Befestigungsabschnitt, mit welchem der Gehäusestutzen an einem Wandabschnitt eines Geräts befestigbar ist, und ein einen Kabelschirm eines durch die Kabeldurchführung hindurchgeführten Kabel kontaktierendes Schirmkontaktelement, wobei das Schirmkontaktelement mit einem Halteelement an dem Befestigungsabschnitt festlegbar ist und das Schirmkontaktelement einerseits den Kabelschirm kontaktiert und andererseits den Wandabschnitt des Geräts mit mindestens einem Gehäusekontaktelement elektrisch kontaktiert, das sich in den Wandabschnitt eingrabend ausgebildet ist. Dieses Schirmkontaktelement kann ein Borstenelement oder ein Kabelschirmkontaktelement zur Kontaktierung des Kabelschirms aufweisen.

Aus EP2479857A2 ist eine Kabeldurchführung vorbekannt, die einen gehäusestutzen, eine daran vorgesehen Kabelfixierung, einen in dem Gehäusestutzen vorgesehenen Befestigungsabschnitt und ein Schirmkontaktelement aufweist. Das Schirmkontaktelement ist aus Metall hergestellt und weist mehrere Spitzen auf, die sich in eine Gehäusewand eingraben. Weiterhin ist ein Borstenemenent vorgesehen, das mit seinen Borsten einen Kabelschirm eines Kabels kontaktieren kann. Das Borstenelement ist leitend an dem Schirmkontaktelement angeordnet.

Aus EP0780924A2 ist Abschirmvorrichtung vorbekannt, die zwei verformbare metallische Körper aufweist, die mittels einer Hülse radial einwärts verformt und hierdurch an eine Abschirmung eines Kabels angedrückt werden können. EP 1 710 880 A1 offenbart eine Kabeldurchführung, umfassend einen Gehäusestutzen, eine am Gehäusestutzen vorgesehene Kabelfixierung, einen an dem Gehäusestutzen vorgesehenen Befestigungsabschnitt, mit welchem der Gehäusestutzen an einem Wandabschnitt eines Geräts befestigbar ist, und ein einen Kabelschirm eines durch die Kabeldurchführung hindurchgeführten Kabels kontaktierendes Schirmkontaktelement.

DE 20 2004 005457 U1 bezieht sich auf eine Kabelverschraubung aus Kunststoff für ein abgeschirmtes Kabel mit einem Gewindeflansch und einer Mutter zur Montage in einem elektrisch leitfähigen Gehäuse.

Nachteilig an derartigen Kabelverschraubungen ist der aufwändige Herstellungsprozess, der zu hohen Fertigungs- und Produktkosten führt.

Kabelverschraubungen werden in zahlreichen Anwendungen in großer Anzahl eingesetzt und unterliegen daher als Massenprodukte einem hohen Preisdruck, aus dem das Bestreben einer kostengünstigen Fertigungsweise resultiert. Daher werden sowohl Einsparungen bei den Materialkosten als auch bei den Fertigungskosten angestrebt.

Der Erfindung liegt daher die Aufgabe zu Grunde, ein Befestigungselement für Kabelverschraubungen bereitzustellen, welche eine zuverlässige elektrische Kontaktierung der Abschirmung gewährleistet und gleichzeitig Fertigungskosten sowie Materialkosten reduziert. Gemäß einem ersten Aspekt der vorliegenden Erfindung wird diese Aufgabe gelöst durch ein Befestigungselement für Kontaktierung von abgeschirmten Kabeln für Kabelverschraubungen, umfassend eine Montagehülse mit einem ersten Axialabschnitt zum Durchführen durch eine Öffnung einer Gehäusewand und einem sich in Längsrichtung der Montagehülse erstreckenden Kabelkanal, eine Befestigungshülse, die lösbar an dem ersten Axialabschnitt der Montagehülse befestigt ist, und die aus einem elektrisch nichtleitenden Material ausgebildet ist, wobei in der Befestigungshülse ein elektrisch leitender Einsatz angeordnet ist, umfassend ein Kabelschirm-Kontaktelement zum elektrischen Kontaktieren eines Kabelschirms, das sich mit einem Kontaktende in Richtung des Kabelkanals erstreckt, und das elastisch verformbar ist aus einer ersten radial einwärts liegenden unbelasteten Position des Kontaktendes zu einer belasteten, radial auswärts von der ersten Position liegenden zweiten Position, ein Wand-Kontaktelement zum elektrischen Kontaktieren einer Gehäusewand, das sich ausgehend von dem Kabelschirm-Kontaktelement in axialer Richtung zu einer der Gehäusewand zugewandten Seite des elektrisch leitenden Einsatzes erstreckt.

In der hier beschriebenen Lösung wird ein Befestigungselement für Kontaktierung von abgeschirmten Kabeln für Kabelverschraubungen mit der Montagehülse und der Befestigungshülse, die aus einem elektrisch nichtleitenden Material ausgebildet ist, bereitgestellt. Zum elektrischen Kontaktieren einer Abschirmung weist die Befestigungshülse einen elektrisch leitenden Einsatz auf. Dieser Einsatz kontaktiert zum einen den Kabelschirm und zum anderen die Gehäusewand.

Das erfindungsgemäße Befestigungselement ermöglicht, dass ein fertigungstechnisch aufwändiges Bauteil der Kabelverschraubung aus einem kostengünstig zu verarbeitenden Material hergestellt wird. Dabei wird der hiermit verbundene Isolationseffekt des elektrisch nichtleitenden Materials der Befestigungshülse, der zunächst grundsätzlich ungeeignet dafür erscheint, zur Herstellung von Kabeldurchführungen für abgeschirmte Kabel eingesetzt. Der Isolationseffekt wird durch den elektrisch leitenden Einsatz in der Befestigungshülse ausgeglichen. Der elektrisch leitende Einsatz weist das Kabelschirm-Kontaktelement zum elektrischen Kontaktieren des Kabelschirms und das Wand-Kontaktelement zum elektrischen Kontaktieren der Gehäusewand auf, sodass der elektrisch leitende Einsatz zur Ausbildung eines elektrischen Kontakts zwischen der Abschirmung und der Gehäusewand geeignet ist.

Das Kabelschirm-Kontaktelement erstreckt sich mit einem Kontaktende in Richtung des Kabelkanals. Hierbei kann sich das Kabelschirm-Kontaktelement vorzugsweise radial, insbesondere axial-radial, ausgehend von der Befestigungshülse einwärts erstrecken. Das Kabelschirm-Kontaktelement ist hierbei elastisch verformbar ausgebildet, sodass ein abgeschirmtes Kabel, das in dem Kabelkanal aufgenommen ist, das Kabelschirm-Kontaktelement, insbesondere das Kontaktende, aus der ersten Position in die zweite, radial auswärts von der ersten Position liegende Position verformt. Durch diese Ausgestaltung kann gewährleistet werden, dass das Kabelschirm-Kontaktelement sicher an dem abgeschirmten Kabel anliegt und dieses elektrisch kontaktiert.

Insbesondere kann das Kabelschirm-Kontaktelement derart elastisch verformbar sein, dass abgeschirmte Kabel mit unterschiedlichen Durchmessern sicher elektrisch kontaktiert werden können.

Das Wand-Kontaktelement erstreckt sich ausgehend von dem Kabelschirm-Kontaktelement in axialer Richtung, insbesondere so weit in Richtung einer der Gehäusewand zugewandten Seite, dass ein elektrisches Kontaktieren einer Gehäusewand ermöglicht wird. Insbesondere kann sich das Wand-Kontaktelement zu der Gehäusewand erstrecken.

Vorzugsweise kann die Befestigungshülse derart an der Montagehülse befestigt werden, insbesondere so weit aufgeschraubt werden, dass das Wand-Kontaktelement in elektrischen Kontakt mit der Gehäusewand steht.

Die Montagehülse kann vorzugsweise hohlzylindrisch ausgestaltet und ausgebildet sein, um das Kabel durch eine Öffnung der Gehäusewand hindurchzuführen. Die Montagehülse kann hierbei zugleich als Gegenhalteelement dienen, um das Befestigungselement in der Öffnung der Gehäusewand zu fixieren. Hierbei kann die Montagehülse zusätzlich zu dem ersten Axialabschnitt, an dem die Befestigungshülse befestigt ist, einen zweiten Axialabschnitt aufweisen, der einen Außendurchmesser aufweist, der größer ist als der Außendurchmesser des ersten Axialabschnitts. Der erste Axialabschnitt kann durch die Gehäuseöffnung hindurchgesteckt werden und dadurch eine Klemmwirkung gegen den am Gehäuse anliegenden zweiten Axialabschnitterzielen. Durch das Befestigen der Befestigungshülse an dem ersten Axialabschnitt kann die Gehäusewand im Bereich um die Gehäusewandöffnung zwischen Befestigungshülse und zweitem Axialabschnitt eingeklemmt und das Befestigungselement und somit die Kabelverschraubung auf diese Weise befestigt werden.

Die Befestigungshülse kann vorzugsweise an dem ersten Axialabschnitt form- oder kraftschlüssig oder einer Kombination hieraus befestigt werden. So sind beispielsweise Klemmverbindungen, Schnappverbindungen, Schraubverbindungen, elastische Verbindungen jeglicher Bauweise hierfür einsetzbar.

Durch diese Ausgestaltung kann die Abschirmung des abgeschirmten Kabels bereits im Zuge der Befestigung der Befestigungshülse auf der Montagehülse in einen fixierten elektrischen Kontakt mit der Befestigungshülse, insbesondere des elektrisch leitenden Einsatzes, gebracht werden.

Die Befestigungshülse kann hierbei vorzugsweise aus Kunststoff ausgebildet sein. Durch die Ausgestaltung der Befestigungshülse aus einem elektrisch nichtleitenden Material, vorzugsweise aus Kunststoff, können sowohl die Material- als auch die Fertigungskosten eingespart werden. Darüber hinaus kann auch ein Gewicht des Befestigungselements und somit der Kabelverschraubung reduziert werden.

Vorzugsweise kann die Befestigungshülse hierbei in einem Spritzgussverfahren hergestellt sein. Dadurch können die Fertigungskosten des Befestigungselements und somit der Kabelverschraubung, insbesondere der Befestigungshülse, weiter reduziert werden.

Sofern auf auswärts und/oder einwärts Bezug genommen wird, beziehen sich diese Richtungsangaben auf die Montagehülse und/oder die Befestigungshülse, insbesondere den durch die Montagehülse gebildeten Kabelkanal bzw. die Längsachse der Befestigungshülse. Unter einwärts ist demnach eine Richtung ausgehend von der Montagehülse bzw. der Befestigungshülse in den Kabelkanal, also vorzugsweise in Richtung der Längsachse, zu verstehen. Entsprechend ist unter auswärts eine Richtung ausgehend von der Montagehülse bzw. der Befestigungshülse nach außen, also von der Längsachse weg zu verstehen.

Vorteilhaft an dem Befestigungselement ist ferner, dass diese für Kabel mit unterschiedlichen Durchmessern eingesetzt werden kann. Insbesondere die Befestigungshülse ermöglicht einen bedarfsorientierten Einsatz hinsichtlich des zu kontaktierenden Kabels.

Vorzugsweise kann der elektrisch leitende Einsatz aus Metall, insbesondere als ein Blech, hergestellt sein. Insbesondere bevorzugt der elektrisch leitende Einsatz zumindest teilweise biegbar ausgestaltet sein.

Insbesondere bevorzugt ist es, dass die Montagehülse aus einem elektrisch nichtleitenden Material ausgebildet ist.

Vorzugsweise kann die Montagehülse aus Kunststoff ausgebildet sein. Dadurch können weiter Material- und Fertigungskosten eingespart sowie das Gewicht des Befestigungselements und somit der Kabelverschraubung reduziert werden.

Insbesondere bevorzugt kann die Montagehülse in einem Spritzgussverfahren hergestellt sein. Dadurch können weiter Fertigungskosten eingespart werden.

Gemäß einer bevorzugten Ausführungsform weist das Kabelschirm-Kontaktelement einen elastisch federnden Anteil auf, der ausgebildet ist, um aus einer ersten Position, in der das Kontaktende in einem ersten Durchmesser angeordnet ist, gegen eine durch die Elastizität erzeugt Rückstellkraft in eine zweite Position elastisch verformt zu werden, in der das Kontaktende in einem zweiten Durchmesser angeordnet ist, der größer ist als der erste Durchmesserweist das Kabelschirm-Kontaktelement einen elastisch federnden Anteil auf, der ausgebildet ist, um elastisch verformt zu werden. Hiermit wird hinsichtlich der Montage eine zuverlässig und einfach zu handhabende elektrische Kontaktierung des abgeschirmten Kabels ermöglicht. Durch den elastisch federnden Anteil kann das Befestigungselement, insbesondere die Befestigungshülse, montiert und auch wieder demontiert werden. Diese Ausgestaltung gewährleistet eine sichere Anlage an Kabeln mit unterschiedlichen Durchmessern. Darüber hinaus kann die Befestigungshülse, insbesondere der elektrisch leitende Einsatz, durch diese Ausgestaltung wiederverwendet werden.

Besonders bevorzugt ist es, dass das Wand-Kontaktelement einen starren Anteil aufweist, der an der der Gehäusewand zugewandten Seite der Befestigungshülse zum Aufkratzen einer Oberflächenschicht einer dem elektrisch leitenden Einsatz zugewandten Seite der Gehäusewand hervorsteht.

Durch diesen starren Anteil kann insbesondere eine Oxid- oder Farbschicht der Gehäusewand aufgekratzt werden. Dadurch kann die elektrische Kontaktierung der Gehäusewand erfolgen.

Vorzugsweise kann der starre Anteil beim Befestigen, insbesondere Zudrehen, der Befestigungshülse an dem ersten Axialabschnitt der Montagehülse in Querschnittslängsrichtung belastet werden.

Durch das Aufkratzen der Oberfläche kann vorzugsweise der starre Anteil zumindest teilweise in eine dem elektrisch leitenden Einsatz zugewandte Seite der Gehäusewand eingebracht werden.

Der starre Anteil kann zumindest teilweise als eine Spitze und/oder ein Blechstreifen ausgebildet sein. Insbesondere bevorzugt kann der starre Anteil zumindest teilweise ein Schneidelement oder eine Schneidkante bilden. Dieses Schneidelement oder diese Schneidkante kann vorzugsweise ausgebildet sein, um beim Zudrehen der Befestigungshülse die Oberfläche der Gehäusewand aufzukratzen und somit insbesondere in die Gehäusewand eingebracht zu werden.

Insbesondere ist es bevorzugt, dass das Kabelschirm-Kontaktelement und das Wand-Kontaktelement integral ausgebildet sind. Dadurch können das Kabelschirm-Kontaktelement und das Wand-Kontaktelement als ein Bauteil ausgebildet sein. Hierdurch kann insbesondere die Handhabung des elektrisch leitenden Einsatzes vereinfacht werden. Darüber hinaus können dadurch die Herstellungskosten des elektrisch leitenden Einsatzes reduziert werden. Vorteilhaft an dieser Ausgestaltung ist ferner, dass hierdurch ein zuverlässiges Kontaktieren des abgeschirmten Kabels sowie der Gehäusewand ermöglicht werden kann.

Vorzugsweise kann ein Verbindeabschnitt zwischen dem Kabelschirm-Kontaktelement und dem Wand-Kontaktelement umspritzt sein. Dadurch kann der elektrisch leitende Einsatz im Bereich des Verbindeabschnitts stabilisiert werden. Insbesondere, wenn das Kabelschirm-Kontaktelement einen elastisch federnden Anteil aufweist oder aus diesem besteht und das Wand-Kontaktelement einen starren Anteil aufweist oder aus diesem besteht, ist es besonders vorteilhaft, den Verbindeabschnitt zu umspritzen. Der umspritzte Verbindeabschnitt kann hierbei vorzugsweise ein Teil der Befestigungshülse bilden.

Gemäß einer bevorzugten Ausführungsform, umfasst das Kabelschirm-Kontaktelement einen Kontaktfinger oder mehrere Kontaktfinger, wobei sich jeder Kontaktfinger mit dem Kontaktende in Richtung des Kabelkanals erstreckt, wobei jeder Kontaktfinger aus der ersten radial einwärts liegenden unbelasteten Position des Kontaktendes zu der belasteten, radial auswärts von der ersten Position liegenden zweiten Position elastisch verformbar ist.

Das Kabelschirm-Kontaktelement kann vorzugsweise einen oder mehrere Kontaktfinger aufweisen oder aus diesen bestehen. Hierbei können die Kontaktfinger jeweils ein Kontaktende aufweisen, das sich in Richtung des Kabelkanals erstreckt. Das Kontaktende des Kontaktfingers bzw. die Kontaktenden der Kontaktfinger können hierbei vorzugsweise das Kontaktende des Kabelschirm-Kontaktelements bilden.

Das Kabelschirm-Kontaktelement kann einen einzigen Kontaktfinger aufweisen, der sich vorzugsweise nach radial einwärts, insbesondere in axialer Richtung nach radial einwärts erstreckt.

Das Kabelschirm-Kontaktelement kann mehrere Kontaktfinger aufweisen, die sich vorzugsweise nach radial einwärts, insbesondere in axialer Richtung nach radial einwärts erstrecken. Die Kontaktfinger können vorzugsweise in Umfangsrichtung verteilt, insbesondere im Wesentlichen gleichmäßig verteilt, angeordnet sein. Die Kontaktfinger können vorzugsweise aus der ersten Position, in der die Kontaktfinger einen ersten Innendurchmesser begrenzen, in die zweite Position beweglich, insbesondere verschwenkt, werden, in der die Kontaktfinger einen zweiten Innendurchmesser begrenzen, der größer ist als der erste Innendurchmesser.

Die Angabe "mehrere" kann vorzugsweise "mehr als einen einzigen" Kontaktfinger beschreiben. Demnach können von dieser Angabe vorzugsweise auch zwei, drei und mehr Kontaktfinger umfasst sein.

Vorzugsweise kann jeder Kontaktfinger elastisch verformbar sein. Vorzugsweise kann jedoch auch jeder Kontaktfinger einen elastisch verformbaren, insbesondere einen federnd elastisch verformbaren, Anteil aufweisen. Dieser Anteil kann vorzugsweise an einem dem Kontaktende gegenüberliegenden Ende des jeweiligen Kontaktfingers ausgebildet sein. Dadurch kann eine Art Gelenkabschnitt gebildet werden.

Der Kontaktfinger bzw. die Kontaktfinger gewährleisten die sichere Anlage der Kontaktenden an abgeschirmten Kabeln mit unterschiedlichen Durchmessern.

Insbesondere ist es bevorzugt, dass der eine Kontaktfinger oder die mehreren Kontaktfinger jeweils an dem Kontaktende einen Klemmschenkel zum elektrischen Kontaktieren des Kabelschirms aufweist, der ausgebildet ist, um zumindest teilweise an dem Kabelschirm eines durch das Befestigungselement durchführbaren Kabels anzuliegen.

Durch den Klemmschenkel kann die sichere Anlage des Kontaktendes an abgeschirmten Kabeln gewährleistet werden.

Vorzugsweise kann der Klemmschenkel vollständig an dem Kabelschirm anliegen. Hierbei kann sich der Klemmschenkel im Wesentlichen parallel zu der Längsachse erstrecken. Dadurch kann vermieden werden, dass beispielsweise eine Kante des Kontaktfingers eine Oberfläche des Kabels beschädigt.

Insbesondere ist es bevorzugt, dass der Klemmschenkel nach radial auswärts gebogen ausgebildet ist. Hierbei können die Klemmschenkel teilweise an einem durchführbaren Kabel anliegen. Eine Krone, die an einem Ende der Kontaktfinger gebildet ist, kann vorzugsweise nach radial auswärts gebogen sein. Durch diese Ausgestaltung kann vermieden werden, dass sich die Kontaktfinger durch Ziehen in eine gegen eine der Fingerausrichtung entgegengesetzte Richtung an dem Kabel verhaken. Hierdurch können Beschädigungen des Kabels sowie der Kontaktfinger vermieden werden.

Gemäß einer bevorzugten Ausführungsform umfasst das Wand-Kontaktelement einen Längsleiter oder mehrere Längsleiter, wobei sich jeder Längsleiter ausgehend von dem Kabelschirm-Kontaktelement in axialer Richtung zu der der Gehäusewand zugewandten Seite des elektrisch leitenden Einsatzes erstreckt.

Das Wand-Kontaktelement kann vorzugsweise aus einem oder mehreren Längsleitern bestehen.

Die Angabe "mehrere" kann vorzugsweise "mehr als einen einzigen" Längsleiter beschreiben. Demnach können von dieser Angabe vorzugsweise auch zwei, drei und mehr Längsleiter umfasst sein.

Unter einem Längsleiter kann ein elektrisch leitendes Element verstanden werden, das sich in Längsrichtung, im Wesentlichen parallel zu einer Längsachse der Befestigungshülse erstreckt. Die Längsleiter können sich vorzugsweise entlang der Befestigungshülse erstrecken. Durch diese Ausgestaltung kann das Wand-Kontaktelement und somit das abgeschirmte Kabel mit der Gehäusewand elektrisch kontaktiert werden.

Ferner ist es bevorzugt, dass das Kabelschirm-Kontaktelement einen Träger umfasst, wobei sich der eine Kontaktfinger oder die mehreren Kontaktfinger ausgehend von dem Träger mit dem Kontaktende in Richtung des Kabelkanals erstreckt, und wobei sich der Längsleiter oder die mehreren Längsleiter des Wand-Kontaktelements ausgehend von dem Träger in axialer Richtung zu der der Gehäusewand zugewandten Seite des elektrisch leitenden Einsatzes erstreckt.

Der Träger kann hierbei vorzugsweise ringförmig ausgebildet sein. Unter ringförmig kann vorzugsweise auch polygonal verstanden werden. Insbesondere bevorzugt kann der Träger auch als ein Teil eines Ringes ausgebildet sein. Der Träger kann hierbei die einzelnen Kontaktfinger miteinander verbinden. Ferner kann der Träger den Kontaktfinger bzw. die Kontaktfinger mit dem Wand-Kontaktelement, insbesondere dem Längsleiter oder den mehreren Längsleitern, verbinden.

Insbesondere ist es bevorzugt, dass der elektrisch leitende Einsatz und/oder das Kabelschirm-Kontaktelement und/oder das Wand-Kontaktelement ein elektrisch leitendes Material umfassen oder aus einem elektrisch leitenden Material bestehen oder eine elektrisch leitende Oberfläche aufweisen.

Vorzugsweise kann der elektrisch leitende Einsatz und/oder das Kabelschirm-Kontaktelement und/oder das Wand-Kontaktelement ein elektrisch leitendes Material umfassen oder aus einem elektrisch leitenden Material bestehen. Dadurch kann die elektrische Leitfähigkeit des Einsatzes gewährleistet werden.

Vorzugsweise kann der elektrisch leitende Einsatz und/oder das Kabelschirm-Kontaktelement und/oder das Wand-Kontaktelement eine elektrisch leitende Oberfläche aufweisen. Hierbei könnte beispielsweise der elektrisch leitende Einsatz und/oder das Kabelschirm-Kontaktelement und/oder das Wand-Kontaktelement aus einem elektrisch nichtleitenden Material, insbesondere Kunststoff, ausgebildet sein. Vorzugsweise könnte der elektrisch leitende Einsatz und/oder das Kabelschirm-Kontaktelement und/oder das Wand-Kontaktelement hierbei in einem Spritzgussverfahren hergestellt sein. Die Kontaktenden können hierbei vorzugsweise eine elektrisch leitende Oberfläche aufweisen, die das Kontaktieren des abgeschirmten Kabels und der Gehäusewand ermöglichen. Ferner können die elektrisch leitenden Oberflächen der Kontaktenden vorzugsweise elektrisch leitend miteinander verbunden sein, insbesondere durch einen elektrischen Leiter und/oder eine weitere elektrisch leitende Oberfläche. Durch diese Ausgestaltung können Materialkosten sowie Fertigungskosten reduziert werden.

Noch weiter ist es bevorzugt, dass der elektrisch leitende Einsatz innerhalb der Befestigungshülse fixierbar ist. Hierbei kann der elektrisch leitende Einsatz insbesondere ortsfest innerhalb der Befestigungshülse fixiert sein.

Der elektrisch leitende Einsatz kann als ein Einlegeteil ausgebildet sein, der vorzugsweise, insbesondere in einem Montagezustand, in dem die Befestigungshülse an der Montagehülse befestigt ist, nicht demontiert werden oder verlorengehen kann.

Insbesondere bevorzugt kann der elektrisch leitende Einsatz formschlüssig innerhalb der Befestigungshülse fixierbar sein. Hierzu kann vorzugsweise der elektrisch leitende Einsatz über eine Rastverbindung mit der Befestigungshülse verbunden sein.

Ferner kann der elektrisch leitende Einsatz auch umspritzt sein. Insbesondere bevorzugt kann hierbei die Befestigungshülse in einem Spritzgussverfahren ausgebildet und hierbei um den elektrisch leitenden Einsatz gespritzt sein.

Durch diese Ausgestaltung wird eine besonders einfache Montage und eine vorteilhafte Handhabbarkeit gewährleistet.

Insbesondere ist es bevorzugt, dass die Befestigungshülse klappbar oder aus zwei Teilen zusammensetzbar ausgestaltet ist, wobei die Befestigungshülse an einem Innenumfang eine Aufnahmestelle zur Aufnahme des elektrisch leitenden Einsatzes aufweist, wobei der elektrisch leitende Einsatz durch Zusammenklappen oder Zusammensetzen der zwei Teile in der Befestigungshülse fixierbar ist.

Die Aufnahmestelle kann insbesondere bevorzugt als eine Nut ausgebildet sein, in der der elektrisch leitende Einsatz aufgenommen werden kann. Diese Ausgestaltung ermöglicht eine ortsfeste Fixierung des elektrisch leitenden Einsatzes in dem Montagezustand. Im Falle einer Beschädigung des elektrisch leitenden Einsatzes kann dieser nach Aufklappen oder Auseinandernehmen der zwei Teile der Befestigungshülse herausgenommen und ausgetauscht werden.

Insbesondere ist es bevorzugt, wenn der elektrisch leitende Einsatz auf die Befestigungshülse gedrückt und an der Befestigungshülse befestigt wird.

Der elektrisch leitende Einsatz kann vorzugsweise auch in die Befestigungshülse hineingedrückt werden.

Hierbei kann der elektrisch leitende Einsatz insbesondere derart ausgebildet sein, dass die Wand-Kontaktelemente, insbesondere die Längsleiter, auf die Befestigungshülse geschoben werden können. Vorzugsweise kann der elektrisch leitende Einsatz zumindest teilweise biegbar ausgebildet sein.

Das Wand-Kontaktelement, insbesondere die Längsleiter, können vorzugsweise einen Innendurchmesser aufweisen, der ausgebildet ist, um auf die Befestigungshülse gedrückt zu werden. Insbesondere bevorzugt kann das Wand-Kontaktelement, insbesondere die Längsleiter, in dem Innendurchmesser aufspreizbar ausgebildet sein. Dadurch kann ein einfaches Aufschieben auf die Befestigungshülse gewährleistet werden. Durch das Aufspreizen kann der elektrisch leitende Einsatz auf der Befestigungshülse gehalten werden.

Die Befestigungshülse kann hierbei vorzugsweise hohlzylindrisch, insbesondere geschlossen, ausgebildet sein und Einkerbungen an einem Außenumfang aufweisen, die zur Aufnahme des aufgeschobenen Wand-Kontaktelements, insbesondere der aufgeschobenen Längsleiter, ausgebildet sind.

Der elektrisch leitende Einsatz kann vorzugsweise formschlüssig und/oder kraftschlüssig an der Befestigungshülse befestigt werden. Insbesondere bevorzugt weisen der elektrisch leitende Einsatz und die Befestigungshülse korrespondierende Rastmittel auf, die ausgebildet sind, um den elektrisch leitenden Einsatz an der Befestigungshülse zu fixieren.

Vorzugsweise kann der elektrisch leitende Einsatz auch mittels einer Schnappverbindung an der Befestigungshülse befestigt werden. Der elektrisch leitende Einsatz kann hierbei vorzugsweise an einem der Gehäusewand zugewandten Seite ein Schnappelement aufweisen, das ausgebildet ist, um den elektrisch leitenden Einsatz über eine Schnappverbindung an der Befestigungshülse zu befestigten. Entsprechend kann die Befestigungshülse ein korrespondierendes Schnappelement aufweisen.

Das Kabelschirm-Kontaktelement erstreckt sich nach radial einwärts, insbesondere in Richtung einer Längsachse der Befestigungshülse. Diese Erstreckung kann vorzugsweise einer Erstreckung in Richtung eines Kabelkanals einer Montagehülse, an der die Befestigungshülse befestigbar ist, entsprechen.

Für weitere Vorteile, Ausführungsvarianten und Ausführungsdetails des weiteren Aspekts und den möglichen Fortbildungen wird auch auf die zuvor erfolgte Beschreibung zu den entsprechenden Merkmalen und Fortbildungen verwiesen.

Bevorzugte Ausführungsbeispiele werden exemplarisch anhand der beiliegenden Figuren erläutert. Es zeigen:
- Fig. 1: eine Seitenansicht eines erfindungsgemäßen Befestigungselements;
- Fig. 2: eine perspektivische Ansicht des Befestigungselements gemäß Fig. 1;
- Fig. 3: eine Schnittansicht des Befestigungselements gemäß Fig. 1;
- Fig. 4: eine Schnittansicht einer Befestigungshülse;
- Fig. 5: eine Explosionsdarstellung des Befestigungselements gemäß Fig. 1;
- Fig. 6: eine Seitenansicht eines erfindungsgemäßen Befestigungselements mit einer aufgeklappten Befestigungshülse;
- Fig. 7: eine aufgeklappte Befestigungshülse;
- Fig. 8: eine Explosionsdarstellung des Befestigungselements gemäß Fig. 6;
- Fig. 9: eine Schnittansicht des Befestigungselements gemäß Fig. 6;
- Fig. 10: eine Explosionsdarstellung eines erfindungsgemäßen Befestigungselements;
- Fig. 11: eine Schnittansicht des Befestigungselements gemäß Figur 10; und
- Fig. 12: eine Detailansicht A des Befestigungselements in einer Schnittdarstellung gemäß Figur 11.

In den Figuren sind gleiche oder im Wesentlichen funktionsgleiche bzw. -ähnliche Elemente mit den gleichen Bezugszeichen bezeichnet.

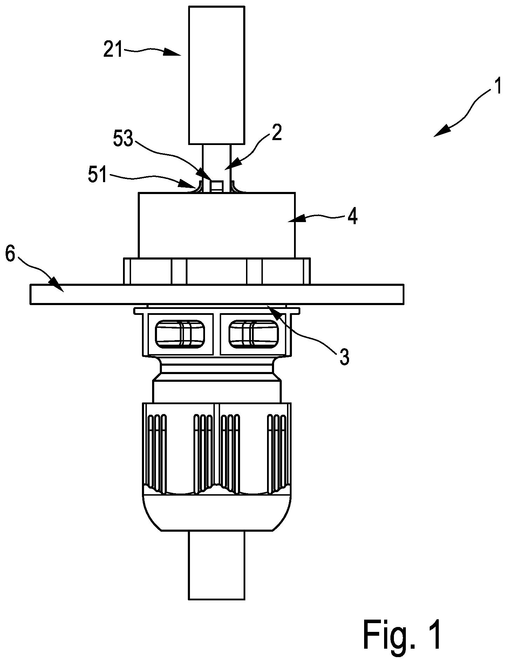

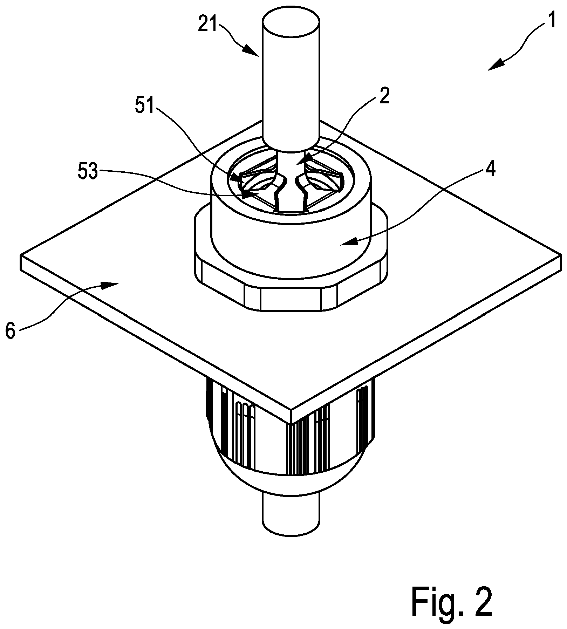

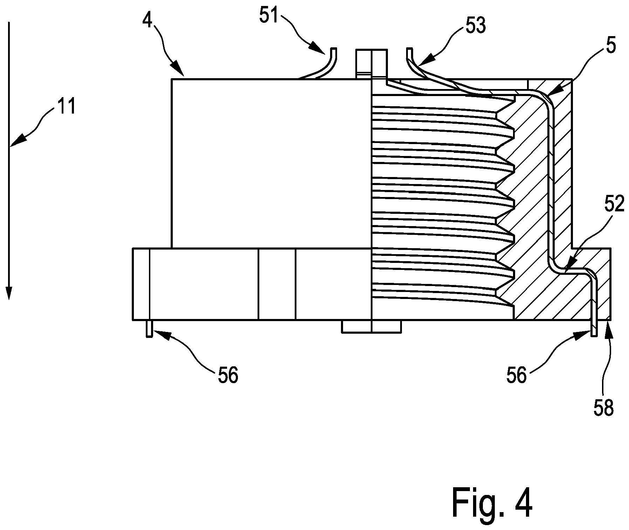

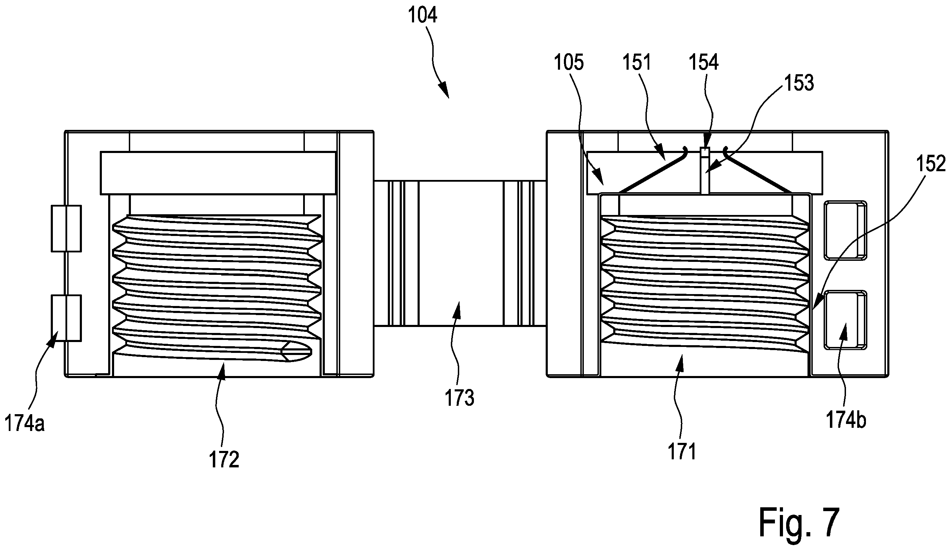

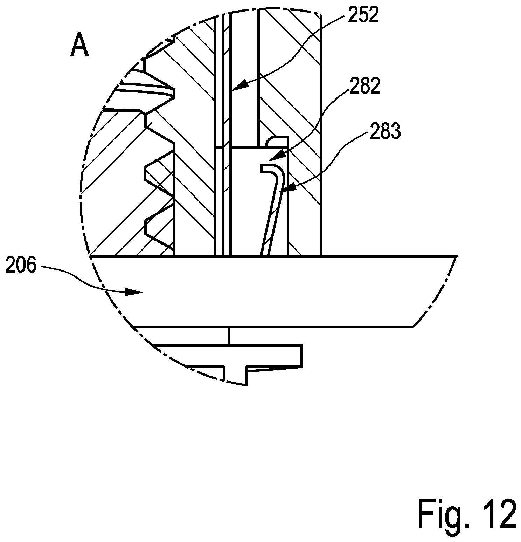

Die Figuren 1 bis 3, 5, 6, 8 und 9 bis 11 zeigen ein Befestigungselement 1, 101, 102, bei der die elektrische Verbindung mittels eines erfindungsgemäßen elektrisch leitenden Einsatzes 5, 105, 205 in der Befestigungshülse 4, 104, 204 erzielt wird. Die Figuren 4 und 7 zeigen eine derartige Befestigungshülse 4, 104, 204 mit dem elektrisch leitenden Einsatz 5, 105, 205. Figur 12 zeigt eine Detailansicht A einer Ausführungsvariante des Befestigungselements 205.

Bezugnehmend zunächst auf die Figuren 1 bis 3 und die Figur 5 ist eine Ausführungsform eines Befestigungselement 1 in unterschiedlichen Ansichten gezeigt. Das gezeigte Befestigungselement 1 ist an einer Gehäusewand 6 befestigt und umfasst eine Montagehülse 3 und eine an der Montagehülse 3 befestigte Befestigungshülse 4. Die Montagehülse 3 ist hohlzylindrisch ausgebildet und weist in einem Inneren einen Kabelkanal auf, in den ein Kabel 21 aufgenommen ist. Die Befestigungshülse umfasst ferner ein Kabelschirm-Kontaktelement 51, das einen Kabelschirm 2 des Kabels 21 elektrisch kontaktiert. Das Kabelschirm-Kontaktelement 51 umfasst hierbei mehrere Kontaktfinger 53, die sich ausgehend von der Befestigungshülse 4 in Richtung zu dem Kabelkanal erstrecken und an dem Kabelschirm 2 anliegen, um diesen elektrisch zu kontaktieren. Die Kontaktfinger 53 weisen hierzu jeweils ein Kontaktende auf, das ausgebildet ist, um den Kabelschirm elektrisch zu kontaktieren.

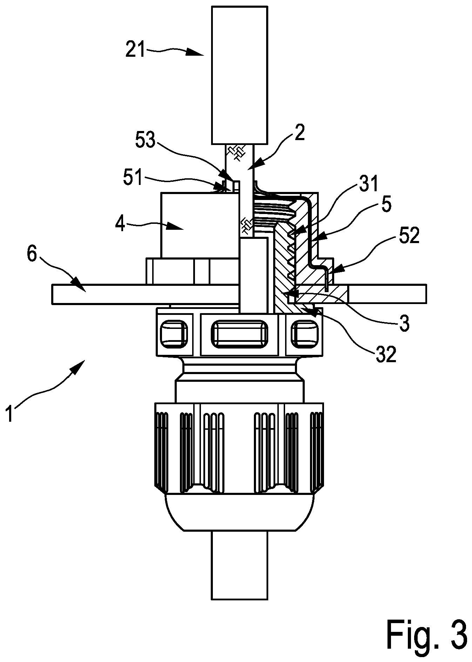

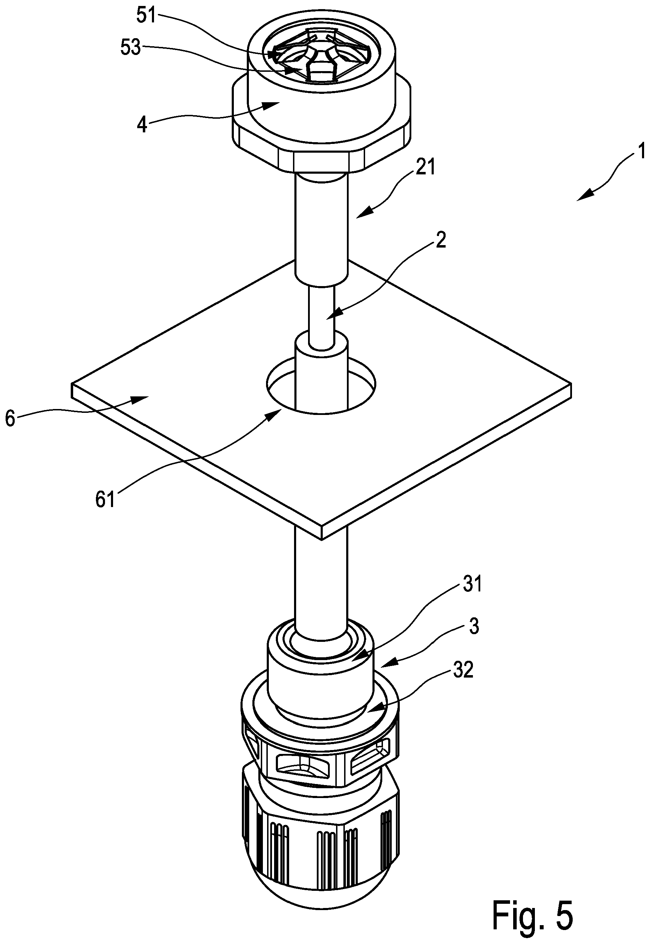

Die Figuren 3 und 5 zeigen, dass die Montagehülse 3 einen ersten Axialabschnitt 31 mit einem ersten Außendurchmesser und einen zweiten Axialabschnitt 32 mit einem zweiten Außendurchmesser, der größer ist als der erste Außendurchmesser aufweist. Die unterschiedlichen Außendurchmesser der Axialabschnitte 31, 32 bilden einen Absatz, der ausgebildet ist, um die Montagehülse an einer Öffnung 61, wie in Figur 5 gezeigt, in der Gehäusewand 6 außen abzustützen.

Das Kabelschirm-Kontaktelement 51 ist Teil eines elektrisch leitenden Einsatzes 5, wie in der Schnittansicht der Figur 3 gezeigt ist. Der elektrisch leitende Einsatz 5 umfasst ferner ein Wand-Kontaktelement 52, das sich ausgehend von dem Kabelschirm-Kontaktelement 51 in axialer Richtung 11 (gezeigt in Figur 4) in Richtung zu der Gehäusewand 6 erstreckt.

Figur 3 zeigt, dass das Wand-Kontaktelement 52 über eine der Gehäusewand 6 zugewandten Seite der Befestigungshülse 4 hervorsteht und in die Gehäusewand 6 ragt. Insbesondere kann der hervorstehende Teil des Wand-Kontaktelements 52 eine Oberfläche der Gehäusewand 6, insbesondere durch Zudrehen der Befestigungshülse 4, aufkratzen und dadurch in die Gehäusewand 6 eingebracht werden. Das Aufkratzen der Oberfläche, insbesondere einer Oxid- oder Farbschicht, gewährleistet das elektrische Kontaktieren der Gehäusewand 6 und dadurch das Erden des abgeschirmten Kabels 21.

Die Befestigungshülse 4 ist mit einem Innengewinde so weit auf ein Außengewinde der Montagehülse 3 geschraubt, dass der elektrisch leitende Einsatz 5 in elektrischen Kontakt mit der Gehäusewand 6 steht und die Gehäusewand 6 zwischen Befestigungshülse 4 und dem durch die Montagehülse 3 gebildeten Absatz eingeklemmt wird. Durch diese Klemmwirkung kann das Befestigungselement 1 sicher in der Öffnung 61 (in Figur 5 gezeigt) der Gehäusewand 6 befestigt werden.

In übereinstimmender Weise ist auf ein Außengewinde der Montagehülse 3 die Befestigungshülse 4 mit einem entsprechenden Innengewinde aufgeschraubt und setzt das Befestigungselement 1 gegen den durch die Montagehülse 3 gebildeten Absatz in der Öffnung 61 (in Figur 5 gezeigt) durch Einklemmen der Gehäusewand 6 fest.

In Figur 4 ist eine Befestigungshülse 4 gezeigt. Die Befestigungshülse 4 umfasst einen elektrisch leitenden Einsatz 5 mit einem Wand-Kontaktelement 52 und einem Kabelschirm-Kontaktelement 51. Das Kabelschirm-Kontaktelement 51 umfasst hierbei Kontaktfinger 53, die sich nach radial einwärts erstrecken. Ausgehend von dem Kabelschirm-Kontaktelement 51 erstreckt sich das Wand-Kontaktelement 52 in Form von Längsleitern in axialer Richtung 11 in Richtung der Gehäusewand 6 zugewandten Seite 58 der Befestigungshülse 4.

Figur 4 zeigt auch einen Vorsprung 56 des Wand-Kontaktelements 52 an der der Gehäusewand zugewandten Seite 58 des Wand-Kontaktelements 52, der ausgebildet ist, um die Oberfläche der Gehäusewand 6 aufzukratzen und somit, wie insbesondere in Figur 3 gezeigt, in die Gehäusewand 6 eingebracht zu werden. Durch diese Ausgestaltung kann das elektrische Kontaktieren durch aufdrehen der Befestigungshülse erzielt werden.

Die Figuren 3 und 4 zeigen, dass die Befestigungshülse 4 ein Innengewinde aufweist, das ausgebildet ist, um die Befestigungshülse an der Montagehülse 3 zu befestigen. Gemäß der in Figur 3 gezeigten Ausführungsform weist die Montagehülse 3 ein Außengewinde auf, das mit dem Innengewinde der Befestigungshülse 4 zusammenwirkt.

Die in den Figuren 1 bis 5 gezeigte Befestigungshülse 4 kann vorzugsweise einstückig, insbesondere geschlossen, ausgebildet sein. Hierbei ist es besonders bevorzugt, wenn die Befestigungshülse 4 in einem Spritzgussverfahren an den elektrisch leitenden Einsatz 5 aufgespritzt ist. Dadurch können insbesondere Materialkosten und Fertigungskosten reduziert werden.

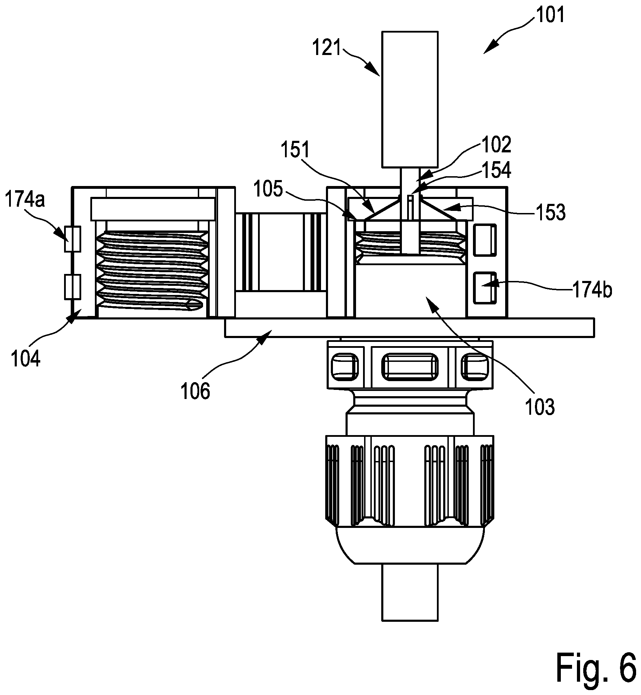

Auch die Figuren 6, 8 und 9 zeigen eine Ausführungsform eines Befestigungselements 101 in unterschiedlichen Ansichten. Das gezeigte Befestigungselement 101 ist an einer Gehäusewand 106 befestigt und umfasst eine Montagehülse 103 und eine an der Montagehülse 103 befestigte Befestigungshülse 104. Die Montagehülse 103 ist hohlzylindrisch ausgebildet und weist in einem Inneren einen Kabelkanal auf, in den ein Kabel 121 aufgenommen ist. Die Befestigungshülse 104 weist zudem einen elektrisch leitenden Einsatz 105 auf, der ein Wand-Kontaktelement 152 und ein Kabelschirm-Kontaktelement 151 umfasst. Das Wand-Kontaktelement 152 erstreckt sich hierbei in axialer Richtung in Richtung zu der Gehäusewand 106.

Das Kabelschirm-Kontaktelement 151 erstreckt sich mit dem Kontaktende ausgehend von der Befestigungshülse in Richtung des Kabelkanals bis zu dem Kabel 121, um den Kabelschirm 102 des Kabels 121 elektrisch zu kontaktieren. Das Kabelschirm-Kontaktelement 151 umfasst hierbei mehrere Kontaktfinger 153, die sich bis zu dem Kabelschirm 102 erstrecken und an dem Kabelschirm 102 anliegen, um diesen elektrisch zu kontaktieren. Die Kontaktfinger 153 weisen hierzu jeweils ein Kontaktende auf, das ausgebildet ist, um den Kabelschirm 102 elektrisch zu kontaktieren.

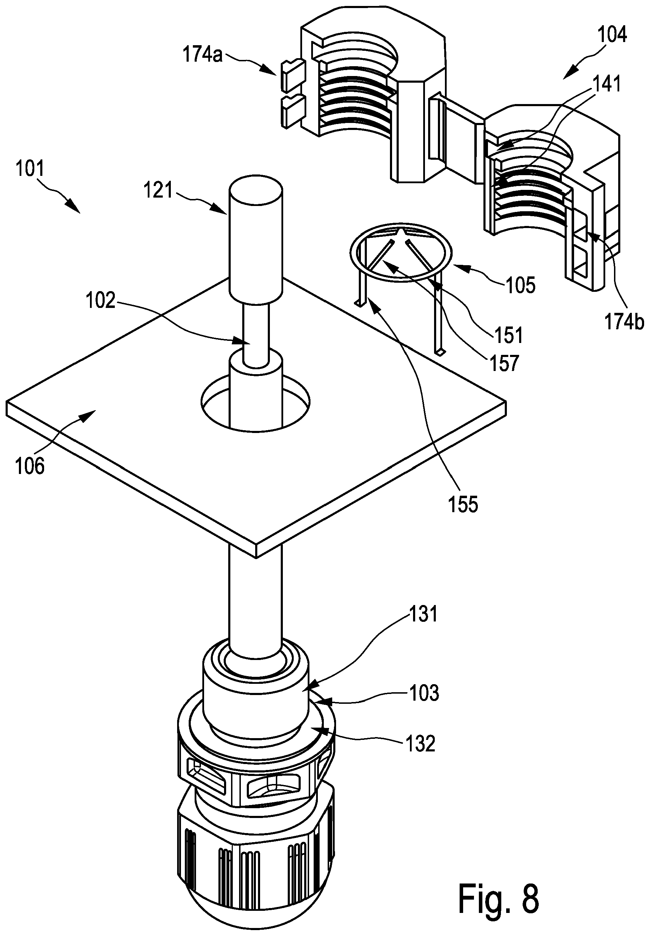

Figur 8 zeigt, dass die Montagehülse 103 einen ersten Axialabschnitt 131 mit einem ersten Außendurchmesser und einen zweiten Axialabschnitt 132 mit einem zweiten Außendurchmesser, der größer ist als der erste Außendurchmesser aufweist. Die unterschiedlichen Außendurchmesser der Axialabschnitte 131, 132 bilden einen Absatz, der ausgebildet ist, um die Montagehülse 103 an einer Öffnung 161 in der Gehäusewand 106 außen abzustützen.

Die Figuren 6, 7 und 9 zeigen, dass die Kontaktfinger 153 jeweils an dem Kontaktende einen Klemmschenkel 154 aufweisen, die nach außen gebogen ausgebildet sind. Dadurch bilden die Kontaktfinger 153 eine insgesamt nach außen gebogene Krone, die Beschädigungen des Kabelschirms 102 durch Relativbewegungen des Kabels 121 verhindert. Gemäß der hier gezeigten Ausführungsform liegen die Klemmschenkel 154 teilweise an dem Kabelschirm 102 des Kabels 121 an, um dieses elektrisch zu kontaktieren.

Die Figuren 6 bis 9 zeigen, dass das Wand-Kontaktelement 152 aus einer der Gehäusewand 106 zugewandten Seite der Befestigungshülse 104 hervorsteht. Hierbei kann das Wand-Kontaktelement 152 an entsprechenden Stellen an der Gehäusewand 106 angeordnet werden, um die Gehäusewand 106 elektrisch zu kontaktieren. Vorzugsweise kann das Wand-Kontaktelement 152 in die Gehäusewand 106 ragen. Insbesondere kann der hervorstehende Teil des Wand-Kontaktelements 152 eine Oberfläche der Gehäusewand 106, insbesondere durch Zudrehen der Befestigungshülse 104, aufkratzen und dadurch in die Gehäusewand 106 eingebracht werden. Das Aufkratzen der Oberfläche, insbesondere einer Oxid- oder Farbschicht, gewährleistet das elektrische Kontaktieren der Gehäusewand 106 und dadurch das Erden des abgeschirmten Kabels 121.

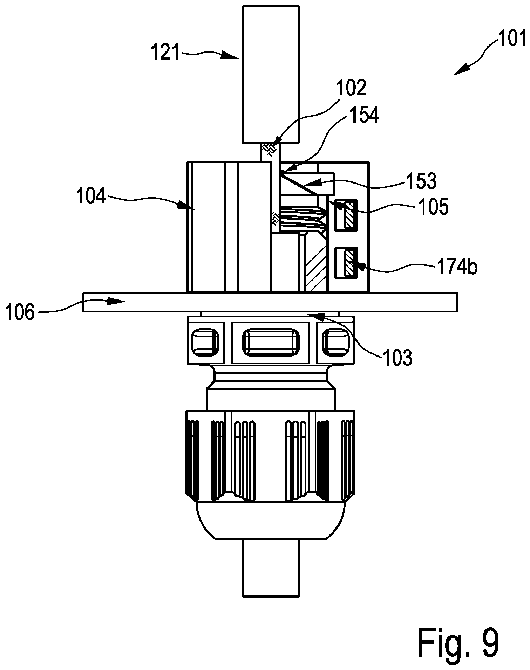

In Figur 6 und 9 ist die Befestigungshülse 104 ist mit einem Innengewinde so weit auf ein Außengewinde der Montagehülse 103 geschraubt, dass der elektrisch leitende Einsatz 105 in elektrischen Kontakt mit der Gehäusewand 106 steht und die Gehäusewand 106 zwischen Befestigungshülse 104 und dem durch die Montagehülse 103 gebildeten Absatz eingeklemmt wird. Durch diese Klemmwirkung kann das Befestigungselement 101 sicher in der Öffnung 161 (in Figur 8 gezeigt) der Gehäusewand 106 befestigt werden.

In übereinstimmender Weise ist auf ein Außengewinde der Montagehülse 103 die Befestigungshülse 104 mit einem entsprechenden Innengewinde aufgeschraubt und setzt das Befestigungselement 101 gegen den durch die Montagehülse 103 gebildeten Absatz in der Öffnung 161 (in Figur 8 gezeigt) durch Einklemmen der Gehäusewand 106 fest.

In Figur 7 ist eine Befestigungshülse 104 gezeigt. Die Befestigungshülse 104 umfasst einen elektrisch leitenden Einsatz 105 mit einem Wand-Kontaktelement 152 und einem Kabelschirm-Kontaktelement 151, das mehrere, an einem Umfang verteilte Kontaktfinger 154 aufweist. Die in Figur 7 dargestellte Befestigungshülse 104 ist klappbar ausgestaltet und umfasst hierzu eine erste Hälfte 171 und eine zweite Hälfte 172. Diese zwei Hälften 171, 172 können - wie hier gezeigt - über ein Filmscharnier 173 oder andere Verbindungen, insbesondere Gelenkverbindungen, miteinander verbunden sein. Das Filmscharnier 173 ermöglicht eine besonders einfache und kostengünstige Herstellung sowie eine einfache Handhabung der Befestigungshülse 104. Diese Ausgestaltung der Befestigungshülse 104 ist auch in den Figuren 6 und 8 gezeigt.

Gemäß dieser Ausgestaltung kann die Befestigungshülse 104 aus dem elektrisch nicht leitenden Material, vorzugsweise aus Kunststoff, insbesondere in einem Spritzgussverfahren hergestellt werden. Der elektrisch leitende Einsatz 105 kann separat hergestellt und in die Befestigungshülse 104 eingebracht werden. Dadurch können insbesondere Fertigungskosten und Materialkosten reduziert werden.

Der Explosionsdarstellung der Figur 8 ist zu entnehmen, dass die Befestigungshülse 104 eine Aufnahmestelle 141 in Form einer Nut aufweist, die ausgebildet ist, um den elektrisch leitfähigen Einsatz 105 aufzunehmen. Durch Aufnehmen des elektrisch leitfähigen Einsatz 105 in die Aufnahmestelle 141 kann dieser in die Befestigungshülse 104 eingebracht und durch Zuklappen der beiden Hälften der Befestigungshülse 104 in dieser befestigt werden.

Die Befestigungshülse 104 weist, wie in den Figuren 6 bis 9 gezeigt Rastelemente 174a,b auf, die ausgebildet sind, um die zwei Hälften 171, 172 der Befestigungshülse 104 in einer geschlossenen Stellung durch Verrasten zu befestigen.

Die Figuren 6 bis 9 zeigen zudem, dass die Befestigungshülse 104 ein Innengewinde aufweist, das ausgebildet ist, um die Befestigungshülse 104 an der Montagehülse 103 zu befestigen. Hierzu weist die Montagehülse 103 ein entsprechendes Außengewinde auf, das mit dem Innengewinde der Befestigungshülse 104 zusammenwirkt.

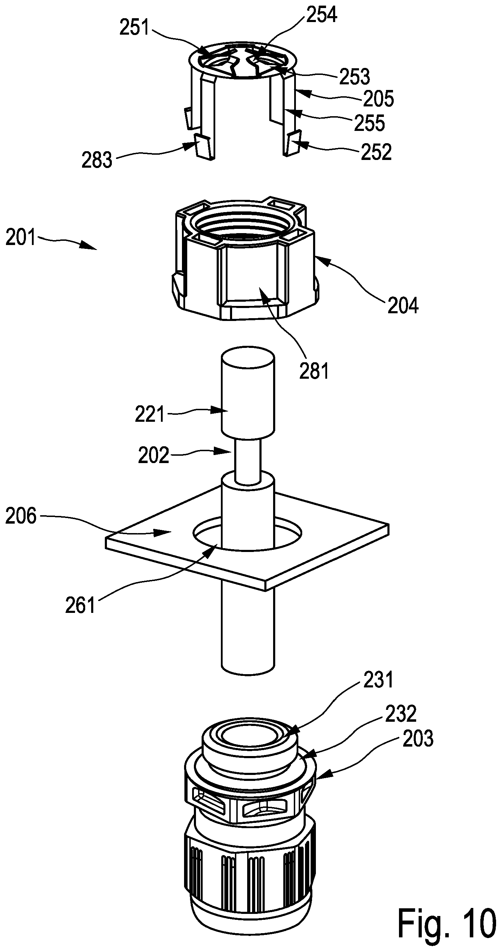

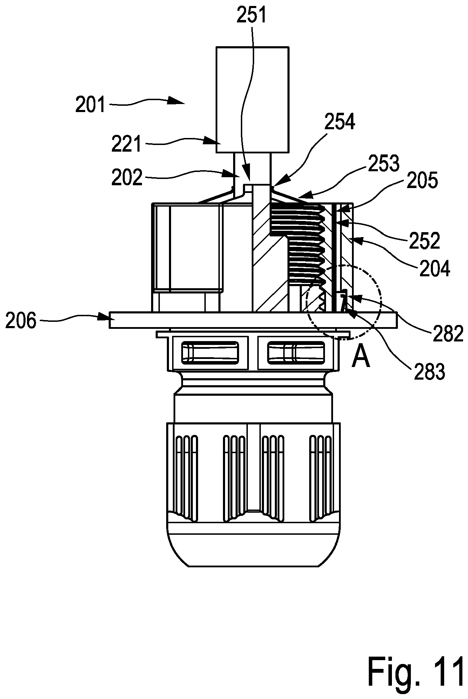

Die Figuren 10 und 11 zeigen ein Befestigungselement 201 in unterschiedlichen Ansichten. Figur 12 ergänzt diese Ansichten durch eine Detailansicht A. Das gezeigte Befestigungselement 201 ist an einer Gehäusewand 206 befestigt und umfasst eine Montagehülse 203 und eine an der Montagehülse 203 befestigte Befestigungshülse 204. Die Montagehülse 203 ist hohlzylindrisch ausgebildet und weist in einem Inneren einen Kabelkanal auf, in den ein Kabel 221 aufgenommen ist. Die Befestigungshülse 204 weist zudem einen elektrisch leitenden Einsatz 205 auf, der ein Wand-Kontaktelement 252 und ein Kabelschirm-Kontaktelement 251 umfasst. Das Wand-Kontaktelement 252 umfasst Längsleiter 255 und erstreckt sich hierbei in axialer Richtung in Richtung zu der Gehäusewand 206.

Das Kabelschirm-Kontaktelement 251 erstreckt sich mit dem Kontaktende ausgehend von der Befestigungshülse in Richtung des Kabelkanals bis zu dem Kabel 221, um den Kabelschirm 202 des Kabels 221 elektrisch zu kontaktieren. Das Kabelschirm-Kontaktelement 251 umfasst hierbei mehrere Kontaktfinger 253, die sich bis zu dem Kabelschirm 202 erstrecken und an dem Kabelschirm 202 anliegen, um diesen elektrisch zu kontaktieren. Die Kontaktfinger 253 weisen hierzu jeweils ein Kontaktende auf, das ausgebildet ist, um den Kabelschirm 202 elektrisch zu kontaktieren.

Figur 10 zeigt, dass die Montagehülse 203 einen ersten Axialabschnitt 231 mit einem ersten Außendurchmesser und einen zweiten Axialabschnitt 232 mit einem zweiten Außendurchmesser, der größer ist als der erste Außendurchmesser aufweist. Die unterschiedlichen Außendurchmesser der Axialabschnitte 231, 232 bilden einen Absatz, der ausgebildet ist, um die Montagehülse 203 an einer Öffnung 261 in der Gehäusewand 206 außen abzustützen.

Die Figuren 10 und 11 zeigen, dass die Kontaktfinger 253 jeweils an dem Kontaktende einen Klemmschenkel 254 aufweisen, die nach außen gebogen ausgebildet sind. Dadurch bilden die Kontaktfinger 253 eine insgesamt nach außen gebogene Krone, die Beschädigungen des Kabelschirms 202 durch Relativbewegungen des Kabels 221 verhindert. Gemäß der hier gezeigten Ausführungsform liegen die Klemmschenkel 254 teilweise an dem Kabelschirm 202 des Kabels 221 an, um dieses elektrisch zu kontaktieren.

Die Figuren 11 und 12 zeigen, dass das Wand-Kontaktelement 252 aus einer der Gehäusewand 206 zugewandten Seite der Befestigungshülse 204 hervorsteht. Hierbei kann das Wand-Kontaktelement 252 an entsprechenden Stellen an der Gehäusewand 206 angeordnet werden, um die Gehäusewand 206 elektrisch zu kontaktieren. Vorzugsweise kann das Wand-Kontaktelement 252 in die Gehäusewand 206 ragen. Insbesondere kann der hervorstehende Teil des Wand-Kontaktelements 252 eine Oberfläche der Gehäusewand 206, insbesondere durch Zudrehen der Befestigungshülse 204, aufkratzen und dadurch in die Gehäusewand 206 eingebracht werden. Das Aufkratzen der Oberfläche, insbesondere einer Oxid- oder Farbschicht, gewährleistet das elektrische Kontaktieren der Gehäusewand 206 und dadurch das Erden des abgeschirmten Kabels 221.

In Figur 11 ist die Befestigungshülse 204 ist mit einem Innengewinde so weit auf ein Außengewinde der Montagehülse 203 geschraubt, dass der elektrisch leitende Einsatz 205 in elektrischen Kontakt mit der Gehäusewand 206 steht und die Gehäusewand 206 zwischen Befestigungshülse 204 und dem durch die Montagehülse 203 gebildeten Absatz eingeklemmt wird. Durch diese Klemmwirkung kann das Befestigungselement 201 sicher in der Öffnung 261 (in Figur 10 gezeigt) der Gehäusewand 206 befestigt werden.

In übereinstimmender Weise ist auf ein Außengewinde der Montagehülse 203 die Befestigungshülse 204 mit einem entsprechenden Innengewinde aufgeschraubt und setzt das Befestigungselement 201 gegen den durch die Montagehülse 203 gebildeten Absatz in der Öffnung 261 (in Figur 8 gezeigt) durch Einklemmen der Gehäusewand 206 fest.

Die in den Figuren 10 bis 12 gezeigte Befestigungshülse 204 umfasst einen elektrisch leitenden Einsatz 205 mit einem Wand-Kontaktelement 252 und einem Kabelschirm-Kontaktelement 251, das mehrere, an einem Umfang verteilte Kontaktfinger 254 aufweist. Der elektrisch leitende Einsatz 205 ist hierbei ausgebildet, um auf die Befestigungshülse 204 gedrückt zu werden.

Die in den Figuren 10 bis 12 gezeigte Befestigungshülse 204 ist hohlzylindrisch und geschlossen ausgebildet. Die Befestigungshülse 204 weist hierbei Einkerbungen 281 auf, die an einem Außenumfang der Befestigungshülse 204 ausgebildet sind. Die Einkerbungen 281 sind hierbei ausgebildet, um den elektrisch leitenden Einsatz, insbesondere das Wand-Kontaktelement aufzunehmen. Durch diese Ausgestaltung kann eine einfache Montage durch Aufschieben der elektrisch leitenden Einsatzes 205 auf die Befestigungshülse 204 gewährleistet werden.

Die Detailansicht A der Figur 12 zeigt, dass das Wand-Kontaktelement 252 und somit der elektrisch leitende Einsatz 205 mittels einer Schnappverbindung 282 an der Befestigungshülse 204 befestigt ist. Hierbei kann die Schnappverbindung 282 vorzugsweise durch Drücken des elektrisch leitenden Einsatzes 205 auf die Befestigungshülse 204 und/oder durch Zudrehen der Befestigungshülse 204 an der Montagehülse 203 erzeugt werden. Der elektrisch leitende Einsatz 205 kann hierbei vorzugsweise an einem der Gehäusewand 206 zugewandten Seite ein Schnappelement 283 aufweisen, das ausgebildet ist, um den elektrisch leitenden Einsatz 205 über die Schnappverbindung 282 an der Befestigungshülse 204 zu befestigten. Entsprechend kann die Befestigungshülse 204 ein korrespondierendes Schnappelement aufweisen.

Gemäß dieser Ausgestaltung kann die Befestigungshülse 204 aus dem elektrisch nicht leitenden Material, vorzugsweise aus Kunststoff, insbesondere in einem Spritzgussverfahren hergestellt werden. Der elektrisch leitende Einsatz 205 kann separat hergestellt und auf die Befestigungshülse 204 gedrückt werden. Dadurch können insbesondere Fertigungskosten und Materialkosten reduziert werden.

Figur 11 zeigt zudem, dass die Befestigungshülse 204 ein Innengewinde aufweist, das ausgebildet ist, um die Befestigungshülse 204 an der Montagehülse 203 zu befestigen. Hierzu weist die Montagehülse 203 ein entsprechendes Außengewinde auf, das mit dem Innengewinde der Befestigungshülse 204 zusammenwirkt.

### Bezuqszeichenliste

- 1, 101, 201: Befestigungselement
- 2, 102, 202: Kabelschirm
- 3, 103, 203: Montagehülse
- 4, 104, 204: Befestigungshülse
- 5, 105, 205: elektrisch leitender Einsatz / Einsatz
- 6, 106, 206: Gehäusewand
- 11, 111, 211: axiale Richtung
- 21,121,221: Kabel
- 31, 131, 231: erster Axialabschnitt
- 32, 132, 232: zweiter Axialabschnitt
- 51, 151, 251: Kabelschirm-Kontaktelement
- 52, 152,252: Wand-Kontaktelement
- 53, 153, 253: Kontaktfinger
- 56: Vorsprung
- 58, 158, 258: Gehäusewand zugewandte Seite
- 61,161,261: Öffnung
- 141: Aufnahmestelle
- 154,254: Klemmschenkel
- 157: Träger
- 171: erste Hälfte
- 172: zweite Hälfte
- 173: Filmscharnier
- 174a,b: Rastelemente
- 255: Längsleiter
- 281: Einkerbung
- 282: Schnappverbindung

## Patentansprüche

1. Befestigungselement (1, 101, 201) für Kontaktierung von abgeschirmten Kabeln für Kabelverschraubungen für abgeschirmte Kabel, umfassend
- eine Montagehülse (3, 103, 203) mit
∘ einem ersten Axialabschnitt (31, 131, 231) zum Durchführen durch eine Öffnung (61) einer Gehäusewand (6, 106, 206) und
∘ einem sich in Längsrichtung der Montagehülse (3, 103, 203) erstreckenden Kabelkanal,
- eine Befestigungshülse (4, 104, 204),
∘ die lösbar an dem ersten Axialabschnitt (31, 131, 231) der Montagehülse (3, 103, 203) befestigt ist, und
∘ die aus einem elektrisch nichtleitenden Material ausgebildet ist,
wobei in der Befestigungshülse (4, 104, 204) ein elektrisch leitender Einsatz (5, 105, 205) angeordnet ist, umfassend
- ein Kabelschirm-Kontaktelement (51, 151, 251) zum elektrischen Kontaktieren eines Kabelschirms (2, 102, 202),
∘ das sich mit einem Kontaktende in Richtung des Kabelkanals erstreckt, und
∘ das elastisch verformbar ist aus einer ersten radial einwärts liegenden unbelasteten Position des Kontaktendes zu einer belasteten, radial auswärts von der ersten Position liegenden zweiten Position,
- ein Wand-Kontaktelement (52, 152, 252) zum elektrischen Kontaktieren einer Gehäusewand (6, 106, 206), das sich ausgehend von dem Kabelschirm-Kontaktelement (51, 151, 251) in axialer Richtung (11, 111, 211) zu einer der Gehäusewand (6, 106, 206) zugewandten Seite (58, 158, 258) des elektrisch leitenden Einsatzes (5, 105, 205) erstreckt.

2. Befestigungselement (1, 101, 201) nach Anspruch 1, wobei die Montagehülse (3, 103, 203) aus einem elektrisch nichtleitenden Material ausgebildet ist.

3. Befestigungselement (1, 101, 201) nach einem der vorstehenden Ansprüche, wobei das Kabelschirm-Kontaktelement (51, 151, 251) einen elastisch federnden Anteil aufweist, der ausgebildet ist, um aus einer ersten Position, in der das Kontaktende in einem ersten Durchmesser angeordnet ist, gegen eine durch die Elastizität erzeugt Rückstellkraft in eine zweite Position elastisch verformt zu werden, in der das Kontaktende in einem zweiten Durchmesser angeordnet ist, der größer ist als der erste Durchmesser.

4. Befestigungselement (1, 101, 201) nach einem der vorstehenden Ansprüche, wobei das Wand-Kontaktelement (52, 152, 252) einen starren Anteil aufweist, der an der der Gehäusewand (6, 106, 206) zugewandten Seite (58, 158, 258) der Befestigungshülse zum Aufkratzen einer Oberflächenschicht einer dem elektrisch leitenden Einsatz (5, 105, 205) zugewandten Seite (58, 158, 258) der Gehäusewand (6, 106, 206)
hervorsteht.

5. Befestigungselement (1, 101, 201) nach einem der vorstehenden Ansprüche, wobei das Kabelschirm-Kontaktelement (51, 151, 251) und das Wand-Kontaktelement (52, 152, 252) integral ausgebildet sind.

6. Befestigungselement (1, 101, 201) nach einem der vorstehenden Ansprüche, wobei das Kabelschirm-Kontaktelement (51, 151, 251) einen Kontaktfinger (53, 153, 253) oder mehrere Kontaktfinger (53, 153, 253) umfasst,
wobei sich jeder Kontaktfinger (53, 153, 253) mit dem Kontaktende in Richtung des Kabelkanals erstreckt,
wobei jeder Kontaktfinger (53, 153, 253) aus der ersten radial einwärts liegenden unbelasteten Position des Kontaktendes zu der belasteten, radial auswärts von der ersten Position liegenden zweiten Position elastisch verformbar ist.

7. Befestigungselement (1, 101, 201) nach dem vorstehenden Anspruch 6, wobei der eine Kontaktfinger (53, 153, 253) oder die mehreren Kontaktfinger (53, 153, 253) jeweils an dem Kontaktende einen Klemmschenkel (54, 154, 254) zum elektrischen Kontaktieren des Kabelschirms aufweist, der ausgebildet ist, um zumindest teilweise an dem Kabelschirm (2, 102, 202) eines durch das Befestigungselement (1, 101, 201) durchführbaren Kabels (21, 121, 221) anzuliegen.

8. Befestigungselement nach dem vorstehenden Anspruch 7, wobei der Klemmschenkel (54, 154, 254) nach radial auswärts gebogen ausgebildet ist.

9. Befestigungselement (1, 101, 201) nach einem der vorstehenden Ansprüche, wobei das Wand-Kontaktelement (52, 152, 252) einen Längsleiter (255) oder mehrere Längsleiter (255) umfasst,
wobei sich jeder Längsleiter ausgehend von dem Kabelschirm-Kontaktelement (51, 151, 251) in axialer Richtung (11, 111, 211) zu der der Gehäusewand (6, 106, 206) zugewandten Seite (58, 158, 258) des elektrisch leitenden Einsatzes (5, 105, 205) erstreckt.

10. Befestigungselement (1, 101, 201) nach einem der vorstehenden Ansprüche 6 bis 8 und Anspruch 9, wobei das Kabelschirm-Kontaktelement (51, 151, 251) einen Träger (157 umfasst,
- wobei sich der eine Kontaktfinger (53, 153, 253) oder die mehreren Kontaktfinger (53, 153, 253) ausgehend von dem Träger (157 mit dem Kontaktende in Richtung des Kabelkanals erstreckt, und
- wobei sich der Längsleiter (255) oder die mehreren Längsleiter (255) des Wand-Kontaktelements (52, 152, 252) ausgehend von dem Träger (157 in axialer Richtung (11, 111, 211) zu der der Gehäusewand (6, 106, 206) zugewandten Seite (58, 158, 258) des elektrisch leitenden Einsatzes (5, 105, 205) erstreckt.

11. Befestigungselement (1, 101, 201) nach einem der vorstehenden Ansprüche, wobei der elektrisch leitende Einsatz (5, 105, 205) und/oder das Kabelschirm-Kontaktelement (51, 151, 251) und/oder das Wand-Kontaktelement (52, 152, 252)
- ein elektrisch leitendes Material umfassen oder
- aus einem elektrisch leitenden Material bestehen oder
- eine elektrisch leitende Oberfläche aufweisen.

12. Befestigungselement (1, 101, 201) nach einem der vorstehenden Ansprüche, wobei der elektrisch leitende Einsatz (5, 105, 205) innerhalb der Befestigungshülse fixierbar ist.

13. Befestigungselement (1, 101, 201) nach einem der vorstehenden Ansprüche, wobei die Befestigungshülse klappbar oder aus zwei Teilen zusammensetzbar ausgestaltet ist,
wobei die Befestigungshülse an einem Innenumfang eine Aufnahmestelle (141) zur Aufnahme des elektrisch leitenden Einsatzes (5, 105, 205) aufweist,
wobei der elektrisch leitende Einsatz (5, 105, 205) durch Zusammenklappen oder Zusammensetzen der zwei Teile in der Befestigungshülse fixierbar ist.

14. Befestigungselement (1, 101, 201) nach einem der Ansprüche 1 bis 11, wobei der elektrisch leitende Einsatz (5, 105, 205) auf die Befestigungshülse (4, 104, 204) gedrückt und an der Befestigungshülse (4, 104, 204) befestigt wird.

## Claims

1. Fastening element (1, 101, 201) for contacting shielded cables for cable glands for shielded cables, comprising
• a mounting sleeve (3, 103, 203) having
• a first axial section (31, 131, 231) for passing through an opening (61) of a housing wall (6, 106, 206) and
• a cable duct extending in the longitudinal direction of the mounting sleeve (3, 103, 203), a fastening sleeve (4, 104, 204),
• detachably attached to the first axial section (31, 131, 231) of the mounting sleeve (3, 103, 203), and
• which is formed from an electrically non-conductive material,
wherein in the fastening sleeve (4, 104, 204) an electrically conductive insert (5, 105, 205) is arranged, comprising
a cable shield contact element (51, 151, 251) for electrical contacting of a cable shield (2, 102, 202),
• which extends with one contact end in the direction of the cable duct, and
• which is elastically deformable from a first radially inwardly lying
unloaded position of the contact end to a loaded second position located radially outward from the first position,
a wall contact element (52, 152, 252) for electrically contacting a housing wall (6, 106, 206),
• which extends from the cable shield contact element (51, 151, 251) in the axial direction (11, 111, 211) towards one side (58, 158, 258) of the electrically conductive insert (5, 105, 205) facing the housing wall (6, 106, 206).

2. Fastening element (1, 101, 201) according to claim 1, wherein the mounting sleeve (3, 103, 203) is formed of an electrically non-conductive material.

3. Fastening element (1, 101, 201) according to any one of the preceding claims, wherein, the cable shield contact element (51, 151, 251) comprises an elastically resilient portion which is configured to move from a first position in which the contact end is arranged in a first diameter to be elastically deformed against a restoring force generated by the elasticity to a second position in which the contact end is arranged In a second diameter larger than the first diameter.

4. Fastening element (1, 101, 201) according to any one of the preceding claims, wherein the wall contact element (52, 152, 252) has a rigid portion protruding at the housing wall (6, 106, 206) facing side (58, 158, 258) of the fastener for scratching a surface layer of the housing wall (6, 106, 206) facing the electrically conductive Insert (5, 105, 205).

5. Fastening element (1, 101, 201) according to any one of the preceding claims, wherein the cable shield contact element (51, 151, 251) and the wall contact element (52, 152, 252) are integrally formed.

6. Fastening element (1, 101, 201) according to any one of the preceding claims, wherein the cable shield contact element (51, 151, 251) has a contact finger (53, 153, 253) or more contact fingers (53, 153, 253),
wherein each contact finger (53, 153, 253) extends with the contact end in the direction of the cable duct,
wherein each contact finger (53, 153, 253) is elastically deformable from the first radially inward unloaded position of the contact end to the loaded second position radially outward of the first position.

7. A fastener (1, 101, 201) according to the preceding claim 6, wherein each of the one contact finger (53, 153, 253) or the multiple contact fingers (53, 153, 253) has a clamping leg (54, 154, 254) at the contact end for making electrical contact with the cable shield, which clamping leg is designed to be attached at least partially to the cable shield (2, 102, 202) of a cable (21, 121, 221) extending through the fastening element (1, 101, 201).

8. A fastener according to the preceding claim 7, wherein the clamping leg (54, 154, 254) is bent radially outward.

9. Fastening element (1, 101, 201) according to any one of the preceding claims, wherein the wall contact element (52, 152, 252) comprises one or more longitudinal conductors (255), wherein each longitudinal conductor extends from the cable shield contact element (51, 151, 251) in axial direction (11, 111, 211) to that side (58, 158, 258) of the electrically conductive insert (5, 105, 205) facing the housing wall (6, 106, 206).

10. Fastening element (1, 101, 201) according to any of the preceding claims 6 to 8 and claim 9,
wherein the cable shield contact member (51, 151, 251) comprises a support (157),
wherein the one or more contact fingers (53, 153, 253) extend from the support (157) with the contact end toward the cable duct, and
wherein the longitudinal conductor (255) or the plurality of longitudinal conductors (255) of the wall contact element (52, 152, 252) extend from the support (157) in axial direction (11, 111, 211) to that side (58, 158, 258) of the electrically conductive insert (5, 105, 205) facing the housing wall (6, 106, 206).

11. Fastening element (1, 101, 201) according to any one of the preceding claims, wherein the electrically conductive insert (5, 105, 205) and/or the cable shield contact element (51, 151, 251) and/or the wall contact element (52, 152, 252) comprise an electrically conductive material or consist of an electrically conductive material or have an electrically conductive surface.

12. Fastening element (1, 101, 201) according to any one of the preceding claims, wherein the electrically conductive insert (5, 105, 205) can be fixed inside the fastening sleeve.

13. Fastening element (1, 101, 201) according to anyone of the preceding claims, wherein the fastening sleeve can be folded or assembled from two parts
wherein the mounting sleeve has a receiving location (141) on an inner circumference for receiving the electrically conductive insert (5, 105, 205),
wherein the electrically conductive insert (5, 105, 205) is fixable in the fixing sleeve by folding or assembling the two parts.

14. Fastening element (1, 101, 201) according to any one of claims 1 to 11, wherein the electrically conductive insert (5, 105, 205) is pressed onto the fastening sleeve (4, 104, 204) and fastened to the fastening sleeve (4, 104, 204).

## Revendications

1. Elément de fixation (1, 101, 201) pour la mise en contact de câbles blindés pour des presse-étoupes pour des câbles blindés, comprenant
- une douille de montage (3, 103, 203) avec
- - une première section axiale (31, 131, 231) destinée à passer par une ouverture (61) d'un mur de bâtiment (6, 106, 206) et
- - une conduite de câbles s'étendant dans le sens longitudinal de la douille de montage (3, 103, 203),
- une douille de fixation (4, 104, 204),
- - qui est fixée de manière amovible sur la première section axiale (31, 131, 231) de la douille de montage (3, 103, 203), et
- - qui est réalisée à partir d'un matériau non conducteur électriquement,
dans lequel un insert électriquement conducteur (5, 105, 205) est disposé dans la douille de fixation (4, 104, 204), comprenant
- un élément de contact de blindage de câble (51, 151, 251) pour établir un contact électrique avec un blindage de câble (2, 102, 202),
- - qui s'étend par une extrémité de contact en direction de la conduite de câbles, et
- - qui peut être déformé élastiquement depuis une première position, située radialement vers l'intérieur, non soumise à une contrainte, de l'extrémité de contact vers une deuxième position soumise à une contrainte, située radialement vers l'extérieur depuis la première position,
- un élément de contact de mur (52, 152, 252) pour établir un contact électrique avec un mur de bâtiment (6, 106, 206),
qui s'étend, en partant de l'élément de contact de blindage de câble (51, 151, 251), dans la direction axiale (11, 111, 211) vers un côté (58, 158, 258), tourné vers le mur de bâtiment (6, 106, 206), de l'insert électriquement conducteur (5, 105, 205).

2. Elément de fixation (1, 101, 201) selon la revendication 1, dans lequel la douille de montage (3, 103, 203) est réalisée à partir d'un matériau non conducteur électriquement.

3. Elément de fixation (1, 101, 201) selon l'une quelconque des revendications précédentes, dans lequel l'élément de contact de blindage de câble (51, 151, 251) présente une portion élastique sur ressorts, qui est réalisée pour être déformée élastiquement depuis une première position, dans laquelle l'extrémité de contact est disposée dans un premier diamètre, à l'encontre d'une force de rappel produite par l'élasticité, dans une deuxième position, dans laquelle l'extrémité de contact est disposée dans un deuxième diamètre qui est plus grand que le premier diamètre.

4. Elément de fixation (1, 101, 201) selon l'une quelconque des revendications précédentes, dans lequel l'élément de contact de mur (52, 152, 252) présente une portion rigide, qui fait saillie sur le côté (58, 158, 258), tourné vers le mur de bâtiment (6, 106, 206), de la douille de fixation pour racler une couche superficielle d'un côté (58, 158, 258), tourné vers l'insert électriquement conducteur (5, 105, 205), du mur de bâtiment (6, 106, 206).

5. Elément de fixation (1, 101, 201) selon l'une quelconque des revendications précédentes, dans lequel l'élément de contact de blindage de câble (51, 151, 251) et l'élément de contact de mur (52, 152, 252) sont réalisés de manière intégrale.

6. Elément de fixation (1, 101, 201) selon l'une quelconque des revendications précédentes, dans lequel l'élément de contact de blindage de câble (51, 151, 251) comprend un doigt de contact (53, 153, 253) ou plusieurs doigts de contact (53, 153, 253),
dans lequel chaque doigt de contact (53, 153, 253) s'étend par l'extrémité de contact en direction de la conduite de câbles,
dans lequel chaque doigt de contact (53, 153, 253) peut être déformé élastiquement depuis la première position située radialement vers l'intérieur, non soumise à une contrainte vers la deuxième position soumise à une contrainte, située radialement vers l'extérieur depuis la première position.

7. Elément de fixation (1, 101, 201) selon la revendication précédente 6, dans lequel le doigt de contact (53, 153, 253) ou les plusieurs doigts de contact (53, 153, 253) présentent respectivement sur l'extrémité de contact une branche de serrage (54, 154, 254) pour établir un contact électrique avec le blindage de câble, laquelle est réalisée pour reposer au moins en partie sur le blindage de câble (2, 102, 202) d'un câble (21, 121, 221) pouvant être passé à travers l'élément de fixation (1, 101, 201).

8. Elément de fixation selon la revendication précédente 7, dans lequel la branche de serrage (54, 154, 254) est réalisée de manière cintrée radialement vers l'extérieur.

9. Elément de fixation (1, 101, 201) selon l'une quelconque des revendications précédentes, dans lequel l'élément de contact de mur (52, 152, 252) comprend un conducteur longitudinal (255) ou plusieurs conducteurs longitudinaux (255),
dans lequel chaque conducteur longitudinal s'étend en partant de l'élément de contact de blindage de câble (51, 151, 251) dans la direction axiale (11, 111, 211) vers le côté (58, 158, 258), tourné vers le mur de bâtiment (6, 106, 206), de l'insert électriquement conducteur (5, 105, 205).

10. Elément de fixation (1, 101, 201) selon l'une quelconque des revendications 6 à 8 et la revendication 9, dans lequel l'élément de contact de blindage de câble (51, 151, 251) comprend un support (157),
- dans lequel le doigt de contact (53, 153, 253) ou les plusieurs doigts de contact (53, 153, 253) s'étendent en partant du support (157) avec l'extrémité de contact en direction de la conduite de câbles, et
- dans lequel le conducteur longitudinal (255) ou les plusieurs conducteurs longitudinaux (255) de l'élément de contact de mur (52, 152, 252) s'étendent en partant du support (157) dans la direction axiale (11, 111, 211) vers le côté (58, 158, 258), tourné vers la paroi de boîtier (6, 106, 206), de l'insert électriquement conducteur (5, 105, 205).

11. Elément de fixation (1, 101, 201) selon l'une quelconque des revendications précédentes, dans lequel l'insert électriquement conducteur (5, 105, 205) et/ou l'élément de contact de blindage de câble (51, 151, 251) et/ou l'élément de contact de mur (52, 152, 252)
- comprennent un matériau électriquement conducteur ou
- sont constitués d'un matériau électriquement conducteur ou
- présentent une surface électriquement conductrice.

12. Elément de fixation (1, 101, 201) selon l'une quelconque des revendications précédentes, dans lequel l'insert électriquement conducteur (5, 105, 205) peut être bloqué à l'intérieur de la douille de fixation.

13. Elément de fixation (1, 101, 201) selon l'une quelconque des revendications précédentes, dans lequel la douille de fixation est configurée de manière escamotable ou de manière à pouvoir être assemblée à partir de deux parties,
dans lequel la douille de fixation présente sur une périphérie intérieure un emplacement de logement (141) pour loger l'insert électriquement conducteur (5, 105, 205),
dans lequel l'insert électriquement conducteur (5, 105, 205) peut être bloqué dans la douille de fixation en rabattant ou en assemblant les deux parties.

14. Elément de fixation (1, 101, 201) selon l'une quelconque des revendications 1 à 11, dans lequel l'insert électriquement conducteur (5, 105, 205) est pressé sur la douille de fixation (4, 104, 204) et est fixé sur la douille de fixation (4, 104, 204).
